# EUROPEAN PATENT APPLICATION

(11) **EP 1 895 798 A1**
(43) Date of publication of application: **05.03.2008**
(21) Application number: 06291375.1
(22) Date of filing: 29.08.2006
(51) Int. Cl.: H04Q 7/38

(54) **Ascertaining the authentication of a roaming subscriber**

(71) Applicant: Axalto SA, 92190 Meudon (FR)
(72) Inventor: Seif, Jacques, 92190 Meudon (FR)
(74) Representative: Jacquot, Ludovic R. G.

(57) **Abstract**

A method for a first home service provider to ascertain that a mobile station of one of its subscriber, when roaming into a service area of a second service provider, has been authenticated by the second service provider is provided. The method includes the second service provider sending location information of the subscriber to the first service provider via e.g. a location update request, and the mobile station sending information to the first service provider indicating that the mobile station has been authenticated by the second service provider e.g. authentication status. A mobile station and a server for implementing the method are also disclosed.

## Description

### TECHNICAL FIELD

This invention relates to a method of authenticating a roaming subscriber. More specifically, the invention relates to a method for a "home" service provider to ascertain that its subscriber, when roaming into a service area of another service provider, has been authenticated by this other service provider.

### BACKGROUND

It is typical for a cellular operator, such as a "home" service provider, to have a number of "foreign" service providers as roaming partners. When a subscriber of a "home" service provider roams to a visited network or service area of one of these "foreign" service providers, it is common for the "home" service provider to authenticate the subscriber via the "foreign" service provider.

Although entities such as service providers and subscribers are used here in association with authentication, those skilled in the art would readily appreciate that these entities do not by themselves carry out authentication but equipment associated therewith that does. For the service providers, the equipment involved includes a home location register (HLR) and an authentication center (AuC). For the subscriber, the equipment involved includes an authentication token, such as a subscriber identity module (SIM), supported in a mobile equipment or terminal (ME). Although it is the task of the "home" service provider to authenticate its subscriber, the "home" service provider may delegate the task of authenticating the subscriber to the "foreign" service provider. When doing so, the "home" service provider sends an authentication vector to the "foreign" service provider. This authentication vector includes at least a random number, RAND, and an expected signature or signed response, XRES, for this random number. The "home" service provider uses the random number, RAND, in conjunction with the subscriber's shared secret, e.g. an authentication secret key, and an algorithm (e.g. AKA f2 function or GSM A3), to generate the expected signed response, XRES. When instructed by the "home" service provider to authenticate the subscriber on behalf of the "home" service provider, the "foreign" service provider should send the random number, RAND, and possibly other parameters, to the subscriber. An authentication token of the subscriber, "signs" the random number, RAND, using the shared secret which is stored therein to generate a signed response, RES. The subscriber sends the generated signed response, RES, to the "foreign" service provider. The "foreign" service provider then compares the subscriber generated signed response, RES, with the expected signed response, XRES, received from the "home" service provider. If the two signed responses match, the "foreign" service provider would then consider the subscriber as authenticated and is therefore a legitimate user of its services. The "foreign" service provider would also inform the "home" service provider about the "successful completion" of the authentication via a "Location Update" request.

For some reasons, not all "foreign" service providers who have been delegated the task of authenticating the subscriber actually do so or do so in the agreed manner. In some cases, some "foreign" service providers omit the authentication procedure entirely. This raises a serious fraud problem for the "home" service provider. An attacker having an illegitimate authentication token can assume the identity of a legitimate subscriber simply by provisioning the victim's identity, for example, the international mobile subscriber identity (IMSI) in the illegitimate authentication token to become a roamer in the "foreign" service area. Such an identity may be obtained for example by radio frequency eavesdropping using available electronic devices or by randomly generating an identity in the predefined format, The attacker would then be able to use the services provided by the "foreign" service provider without having to pay for them. The legitimate subscriber would be billed for the attacker's usage instead, a situation which is highly undesirable for the legitimate subscriber. Of course, if the roamer is fraudulent, the "home" service provider cannot demand that the legitimate subscriber pick up the bill and thus may have to absorb the loss itself.

What is worse is that since the attacker is now registered with the "foreign" service provider as the legitimate subscriber, services to the legitimate subscriber in the "home" service area might be disrupted since the "home" service provider is led to believe, via the "Location Update" request, that the subscriber has now roamed into the "foreign" service area. In such an event, the "home" service provider may disconnect the subscriber totally from the "home" service area and thereby denying him any service.

It is thus desirable for the "home" service provider to be able to ascertain that its subscriber is at least authenticated by a "foreign" service provider when the subscriber roams into the "foreign" service area. Preferably, the authentication by the "foreign" service provider is in accordance with that expected by the "home" service provider. It is also desirable for the "home" service provider to identify the "foreign" service providers that are not properly authenticating subscribers.

### DESCRIPTION OF THE INVENTION

According to an aspect of the invention, there is provided a method for a first service provider to ascertain that one of its subscribers, when roaming into a service area of a second service provider, has been authenticated by the second service provider. The method includes the second service provider sending location information of the subscriber to the first service provider, via a "Location Update" request. Although this "Location Update" request is typically sent after the subscriber is authenticated, the first service provider cannot be certain if the second service provider has actually authenticated the subscriber. The method is characterized in that it further includes the mobile station (including a mobile terminal and a authentication token) of the subscriber sending information to the first service provider indicating that the mobile station has been authenticated by the second service provider.

According to some embodiments, the information that the mobile station sends to the first service provider includes an authentication status of the mobile station. When the second service provider authenticates the mobile station, the mobile station maintains a status indicating that it has been authenticated. The mobile station may send this authentication status to the first service provider to at least inform the first service provider that some authentication has been carried out by the second service provider. In other embodiments, the information includes at least one of the random number, RAND, that is received by the mobile station during authentication, and the signed response, RES, generated by the mobile station based on the random number, RAND. Additionally, the location information indicating the new location of the mobile station may also be sent by the mobile station to the first service provider to indicate to the first service provider that the mobile station is in the service area of the second service provider. This location information may include the mobile country code (MCC), mobile network code (MNC), location area code (LAC) and cell ID. For all the embodiments, the information may be sent from the mobile station to the first service provider in an unprotected or protected form. In the protected form the information may be signed and/or encrypted.

The mobile station may send the information to the first service provider when instructed by the first service provider to do so. Alternatively, the mobile station may send the information to the first service provider when a predetermined event occurs at the mobile station. The predetermined event includes, but is not limited to,
• authentication of the mobile station;
• predetermined intervals, such as at twenty-four hour intervals;
• the receipt of a predetermined number of random numbers, RAND, by the mobile station for authentication;
• the generation of the predetermined numbers of signed responses, RES;
• the attachment of the mobile station to the network of the second service provider;
• upon return to the network of the first service provider after it has visited the network of the second service provider.

According to another aspect of the invention, there is provided a mobile station including an authentication token issued by a first service provider. The mobile station includes means for responding to an authentication request or challenge by a second service provider when the mobile station roams into the service area of the second service provider. The mobile station is characterized in that the mobile station further includes a means for sending information to the first service provider, in the manner described above, indicating that the mobile station has been authenticated by the second service provider. This means for sending information may reside in either a mobile terminal or the authentication token of the mobile station.

According to yet another aspect of the invention, there is provided a server of a first service provider. The server includes means for receiving location update request information from a second service provider when a mobile station of a subscriber of the first service provider roams into the service area of the second service provider and is thereby authenticated. The server is characterized in that it further includes means for receiving information from the mobile station indicating that the mobile station has been authenticated by the second service provider. This server may be a Short Message Service (SMS) Server, a Unstructured Supplementary Service Data (USSD) server or a similar node known to those skilled in the art.

According to a yet a further aspect of the invention, there is provided a program storage device readable by a processor of a mobile terminal or an authentication token of a mobile station. The program store device tangibly embodies a program of instructions that are executable by the processor to send information to the first service provider, in the manner described above, indicating that the mobile station has been authenticated by the second service provider.

Other aspects and advantages of the invention will become apparent from the following detailed description, taken in conjunction with the accompanying drawings, illustrating by way of example the principles of the invention.

### BRIEF DESCRIPTION OF DRAWINGS

The invention will be better understood with reference to the drawings, in which:
Figure 1 is a schematic drawing of a GSM mobile communications system that includes several GSM networks and a system defined therein, according to one embodiment of the invention, that allows a first service provider to ascertain that a subscriber when roaming into a service area of a second service provider has been authenticated by the second service provider, the system including a mobile station and a server;
Figure 2 is a schematic drawing of the mobile station in Figure 1, the mobile station including a mobile terminal and a subscriber identity module (SIM);
Figure 3 is a flowchart showing a method, according to one embodiment, in the system in Figure 1 for allowing a first service provider to ascertain that one of its subscribers has been authenticated; and
Figure 4 is a flowchart similar to Figure 3, showing a method according to another embodiment of the invention.

### DETAILED DESCRIPTION OF THE EMBODIMENTS

As shown in the drawings for purposes of illustration, the invention is embodied in a novel system and method for allowing a first service provider to ascertain that a subscriber associated therewith, when roaming into a service area of a second service provider, has been authenticated by the second service provider.

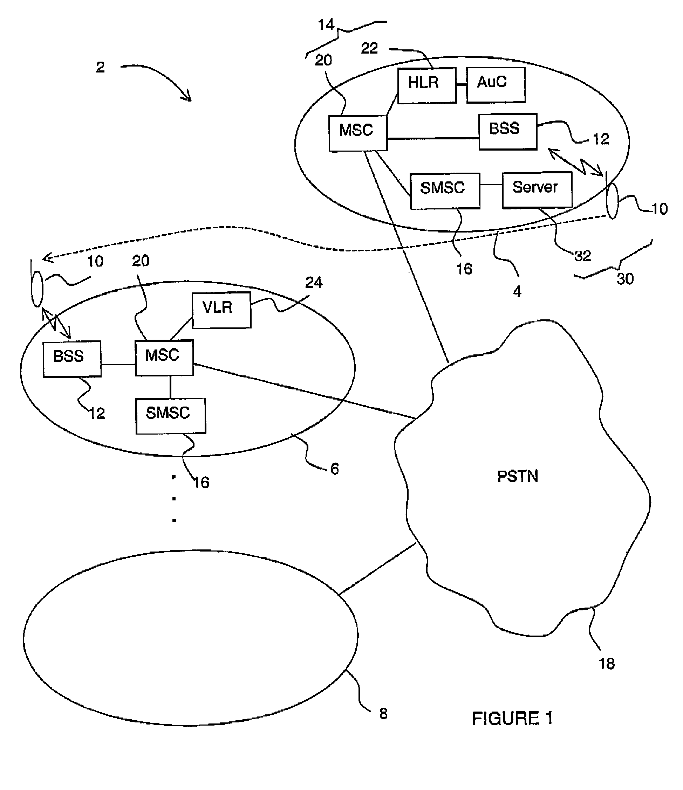

Figure 1 shows a simplified Global System for Mobile communications (GSM) system 2 that includes several GSM networks 4, 6, 8. These networks 4, 6, 8 include a "home" network 4, and several other networks 6, 8 which communicate with each other using mobile application part (MAP) and signaling system #7 (SS7) protocol signaling. The "home" network is operated by a first or "home" service provider offering mobile services that a mobile subscriber subscribes to and thus becomes associated with. One of the other networks 6, 8 is operated by a second service provider. The second service provider may reside in the same home country as the "home" service provider, or it may reside in a different or foreign country. When residing in a foreign country, the second service provider is known as a "foreign" service provider. Each of these networks 4, 6, 8 may be a virtual network operated by a mobile virtual network operator (MVNO). The principle component groups of each GSM network 4, 6, 8 includes a mobile station (MS) 10, a base station system (BSS) 12, a network switching system 14 and a short message service center (SMSC) 16. The mobile station (MS) 10, includes but is not limited to, a mobile phone. The base station system 12 provides the radio inter-connection from the mobile station 10 to the network switching system 14. The network switching system 14 interconnects the GSM network 4, 6, 8 and the Public Switched Telephone Network (PSTN) 18. The network switching system 14 includes a Mobile Services Switching Centre (MSC) 20, location registers 22, 24, such as a Home Location Register (HLR) 22 and a Visitor Location Register (VLR) 24, and an Authentication Centre (AuC) 25. These location registers 22, 24 are database-oriented processing nodes for managing subscriber data and keeping track of a mobile subscriber's location as it roams around the GSM communication system 2, i.e. keeping track of which MSC 20 and VLR 24 the mobile subscriber is being currently served by. Associated with the HLR 22 is the authentication center (AuC) 25, which is another database that contains the algorithms for authenticating subscribers and the necessary keys for encryption.

In some systems, the "home" service provider may delegate the task of authenticating a subscriber of the "home" service provider to a "foreign" service provider or another service provider in the home country. The "home" service provider sends an authentication vector including a random number, RAND, and an expected signed response, XRES, based on the random number to the delegated service provider to allow the delegated service provider to use them during authentication of a subscriber. The delegated service provider may store the authentication vector in its VLR 24.

The GSM communication system 2 also includes an authentication ascertainment system 30 according to an embodiment of the invention. The system 30 includes the mobile station 10 and a backend server 32 connected to the SMSC 16 either via a local area network (LAN), a wide area network (WAN), or a virtual private network (VPN). The SMSC 16 delivers short message service (SMS) messages to the mobile station 10 and the backend server 32.

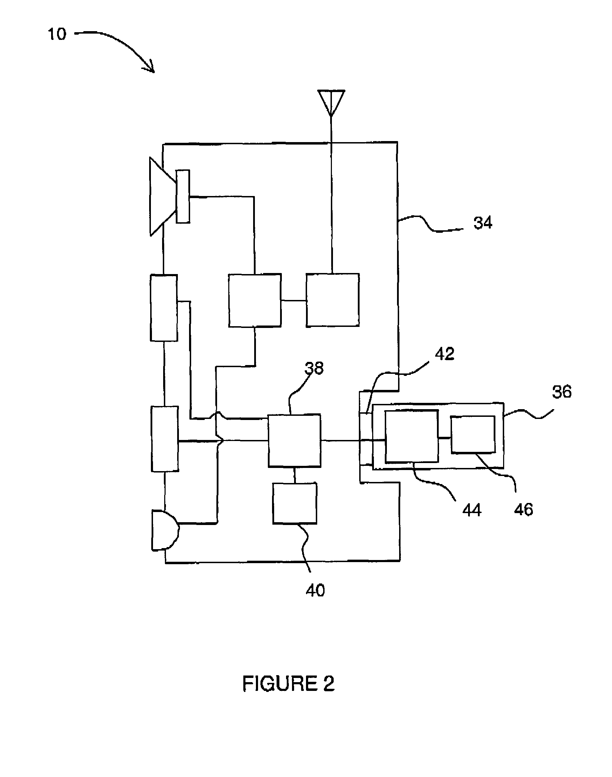

Referring to Figure 2, the mobile station 10 includes a mobile equipment or terminal (ME) 34, and an authentication token in the form of an electronic "smart card" or chip card (equipped with a microprocessor). This authentication token is known as a subscriber identity module (SIM) 36 when used in a GSM network. The SIM is programmed with a unique international Mobile Subscriber Identity (IMSI).

The mobile terminal 34 includes a processor 38 and its associated memory 40. The mobile equipment 34 is connected to the removable SIM 36 via electrical contacts 42. The SIM 36 includes a SIM processor 44 and a SIM memory 46. The SIM 36 is used for the storage and retrieval of data items by the processor 38 of the mobile terminal 34, The command set, data file structure and data coding used for data communicated via the interface between the mobile terminal processor 38 and the SIM processor 44 are specified in 3GPP technical specification 11.11 or ETSI Technical Specification 100.977.

Applications are stored on the SIM 36 card that allow interactions between the SIM 36 and the mobile terminal 34. These applications may be supported by the SIM application toolkit or a similar platform. The applications may be developed using a number of computer programming languages, such as C, Java™ or any other proprietary programming language.

Typical applications include downloading data and "events" to the SIM 36. Data records are stored in what is known as elementary files in the SIM memory 46. One example of such an elementary file stored in the SIM memory 46 is the location information (LOCI) elementary file. This LOCI elementary file includes the temporary mobile subscriber identity (TMSI), location area information (LAI) and location update status information.

According to one embodiment of the invention, a SIM toolkit application stored in the SIM memory 46 that is responsible for responding to an authentication challenge by a service provider, delegated by the "home" service provider, is adapted to also provide the "home" service provider with information regarding its authentication by the delegated service provider. Such an application is also known as an applet, or more specifically a cardlet, when implemented on a Java™ card type of SIM. The application may be downloaded over-the-air (OTA) onto or preinstalled on the SIM 36.

When the mobile subscriber holding the mobile station 10 moves from the "home" service area to the service area of the delegated service provider, such as that shown by the broken line in Figure 1, the delegated service provider of the visited service area would authenticate the mobile station using the authentication vector it received from the "home" service provider. When authenticating the mobile station 10, the delegated service provider sends the random number, RAND, to the mobile station 10. The SIM 36 receives this random number, RAND, and generates a signed response, RES, based on the random number using a secret key stored in the SIM 36. The application stores the random number, RAND, and signed response, RES. The application also keeps a count of the number of signed responses, RES that are generated by the SIM 36 during authentication.

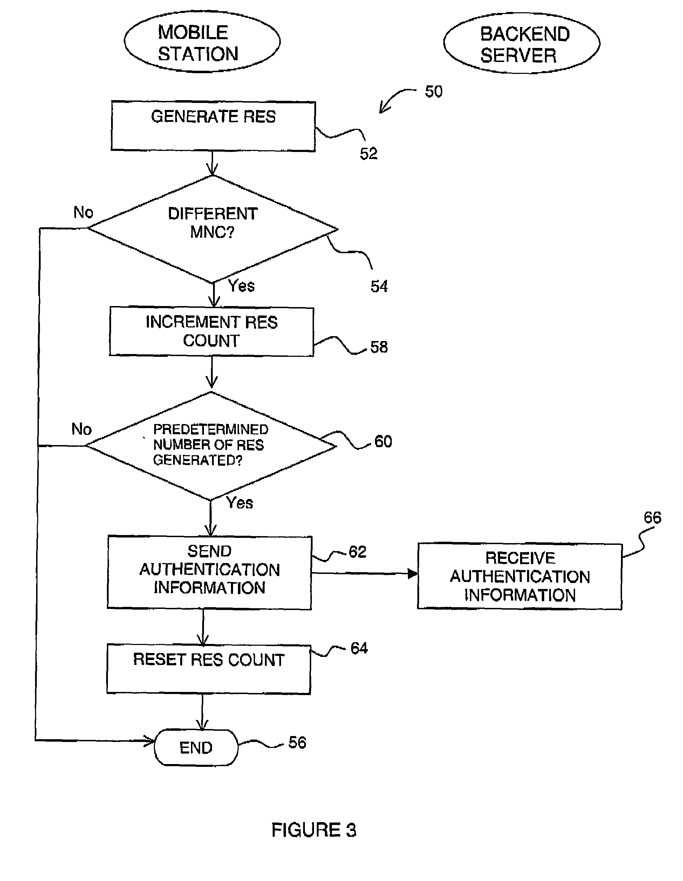

Execution of the authentication application performs a method for allowing the "home" service provider to ascertain that its subscriber, when roaming into a service area of the delegated service provider, has been authenticated by the delegated service provider. Figure 3 is a flowchart showing a sequence 50 of steps that implements the method. The sequence 50 starts in a GENERATE RES step 52 when the mobile station 10 receives an authentication challenge that includes a random number, RAND, In this GENERATE RES step 52, the SIM processor 44 generates a signed response, RES, using the secret key stored in the SIM 36. The SIM 36 then instructs the mobile terminal 34 to send the generated signed response, RES, to the delegated service provider for verification with the expected signed response received from the "home" service provider. The sequence 50 next proceeds to a SERVICE PROVIDER DIFFERENT FROM "HOME" SERVICE PROVIDER? decision step 54, wherein the SIM processor 44 checks if the MCC and the MNC associated with the authentication challenge is the same as that of the "home" service provider stored in the SIM 36. If it is determined that both the MCC and MNC are the same as that of the "home" service provider, the sequence 50 terminates in an END step 56, However, if either the MCC or the MNC is determined to be different from that of the "home" service operator, the sequence 50 proceeds to an INCREMENT RES COUNT step 58, wherein the SIM processor 44 increments a count of the number of signed responses generated. In this step 58, the SIM 36 also stores the random number received and the generated signed response in a list.

The sequence 50 next proceeds to a PREDETERMINED NUM OF RES GENERATED? decision step 60, wherein the SIM processor 44 checks if the number of signed responses generated has reached a predetermined number, e.g. the number five. If it is determined in this decision step 60 that the predetermined number has not been reached, the sequence 50 ends in the END step 36. However, if it is determined that the number of signed responses has reached the predetermined number, the sequence 50 proceeds to the SEND AUTHENTICATION INFORMATION step 62, wherein the SIM processor 44 encrypts the stored random numbers, RAND, and signed responses, RES, stored in the list using its secret key to generate encrypted information, and sends this encrypted information to the "home" service provider. This encrypted information and the IMSI are sent in a message to the "home" service provider, via short message system (SMS) message, a general packet radio service (GPRS) or other means known to those skilled in the art. Optionally, the new location information may also be included in the message. The sequence 50 next proceeds to a RESET RES COUNT step 64, wherein the SIM processor 44 resets the count to zero. The sequence 50 then ends in the END step 56.

The message sent by the mobile station 34 is delivered by the system to the server 32 of the "home" service provider. The server 32 has means for receiving and processing the message in a RECEIVE AUTHENTICATION INFORMATION step 66. In this step 66, the server 32 uses the IMSI in the message to obtain the associated secret key, which the server 32 uses to decrypt the encrypted information to obtain the random numbers and signed responses generated by the SIM 36. The server 32 is able to compare these random numbers and/or signed responses with that sent earlier to the delegated service provider. If the random numbers and/or signed responses match, the "home" service provider can ascertain that the delegated service provider who is delegated the task of authenticating the subscriber has actually done so and in a manner required by the "home" service provider. Alternatively, if it does not pose a security issue, the authentication center 25 may send the secret key to the server 32. The server 32 may then generate the signed responses based on the secret key and the respective random numbers received to determine if these generated signed responses match the corresponding signed responses received from the mobile station 10.

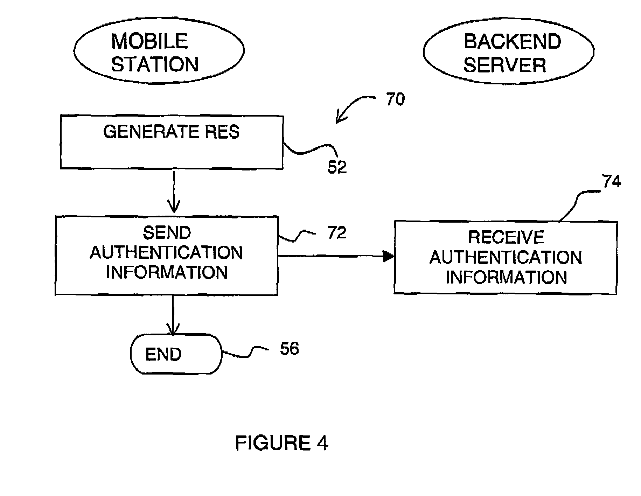

Figure 4 shows a sequence 70 according to another embodiment of the invention. According to this embodiment, after the GENERATE RES step 52, the sequence 70 proceeds to a SEND AUTHENTICATION INFORMATION step 72, wherein the SIM processor 44 sends data to the "home" service provider to indicate that it has been authenticated by the delegated service provider. The server 32 receives this data in a RECEIVE AUTHENTICATION INFORMATION step 74. Although, in such a case, the "home" service provider cannot know for sure if the authentication process is carried out according to its instructions, i.e. using the authentication vector that was sent to the delegated service provider, the "home" service provider is nevertheless able to know that the subscriber has at least been authenticated by the delegated service provider.

Although the present invention is described as implemented in the above-described embodiments, it is not to be construed to be limited as such. As an example, according to yet another embodiment, regardless of whether the information sent is a number of random numbers and/or signed responses, or data indicating that some authentication has been carried out, the information may be sent to the "home" service provider only after the "home" service provider has explicitly requested the mobile station 10 to do so. The "home" service provider makes such a request, for example via SMS when its subscriber attaches to a network that may be deemed suspicious.

## Claims

1. A method (50, 70) for a first service provider to ascertain that a mobile station (10) of one of its subscriber when roaming into a service area of a second service provider has been authenticated by the second service provider, the method (50, 70) comprising:
the second service provider informing the first service provider that the mobile station is located in the service area of the second service provider;
**characterized in that** the method (50, 70) further comprises:
the mobile station sending (62, 72) information to the first service provider indicating that the mobile station (10) has been authenticated by the second service provider.

2. A method (50, 70) according to Claim 1, **characterized in that** the information comprises an authentication status.

3. A method (50, 70) according to Claim 1, **characterized in that** the information comprises at least one of a random number received by the mobile station (10) from the second service provider for authentication of the mobile station (10), and a signed response generated by the mobile station (10) in response to the authentication.

4. A method (50, 70) according to Claim 3, **characterized in that** the information are encrypted and/or signed.

5. A method (50, 70) according to any one of Claims 1-4, **characterized in that** the mobile station (10) sends information to the first service provider when the mobile station (10) is instructed by the first service provider to do so.

6. A method (50, 70) according to any one of Claims 1-4, **characterized in that** the mobile station (10) sends information to the first service provider when a predetermined event occurs.

7. A method (50, 70) according to Claim 6, **characterized in that** the predetermined event comprises one of the following:
authentication of the mobile station (10);
a predetermined interval;
a predetermined number of random numbers received from the second service provider or signed responses generated by the mobile station;
when the mobile station attachesto the network of the second service provider; and
upon return to the network of the first service provider after it has visited the network of the second service provider.

8. A program storage device readable by a processor (38, 44) of a mobile station (10), tangibly embodying a program of instructions, executable by the processor to perform a method comprising the mobile station sending information to a first service provider associated therewith to indicate that the mobile station has been authenticated by a second service provider.

9. A software program having instructions executable by a processor (38, 44) of a mobile station (10) comprising a mobile terminal (34) and a subscriber identity module (36) for implementing a method for a first service provider to ascertain that a mobile station (10) of one of its subscriber when roaming into a service area of a second service provider has been authenticated by the second service provider, the method (50, 70) comprising:
the second service provider informing the first service provider that authentication has been carried out;
**characterized in that** the method (50, 70) further comprises:
the mobile station sending (62, 72) information to the first service provider indicating that the mobile station (10) has been authenticated by the second service provider.

10. A mobile station associated with a first service provider comprising:
means for responding to an authentication request by a second service provider when the mobile station roams into the service area of the second service provider,
**characterized in that** the mobile station further comprises:
means for sending information to the first service provider indicating that the mobile station has been authenticated by the second service provider.

11. A server of a first service provider comprising:
means for receiving an authentication response from a second service provider when a mobile station of a subscriber of the first service provider roams into the service area of the second service provider and is authenticated thereby;
**characterized in that** the server further comprises:
means for receiving information from the mobile station indicating that the mobile station has been authenticated by the second service provider.

12. A server according to Claim 11, **characterized in that** the server further comprises means for requesting the information from the mobile station.
